# EUROPEAN PATENT SPECIFICATION

(11) **EP 1 775 896 B1**
(45) Date of publication and mention of the grant of the patent: **13.01.2010**
(21) Application number: 06121291.6
(22) Date of filing: 26.09.2006
(51) Int. Cl.: H04L 12/56

(54) **Network on chip system employing an Advanced Extensible Interface (AXI) protocol**
Netzwerk-on-Chip-System mit Advanced Extensible Interface (AXI) Protokoll
Système de réseau sur puce utilisant le protocole Advanced Extensible Interface (AXI)

(30) Priority: 12.10.2005 KR 20050096105
(43) Date of publication of application: 18.04.2007
(73) Proprietor: Samsung Electronics Co., Ltd., Suwon-si, Gyeonggi-do (KR)
(72) Inventor: Lee, Beom-hak, Seoul (KR); Kim, Eui-seok, Gyeonggi-do (KR); Rhim, Sang-woo, Seoul (KR)
(74) Representative: Ertl, Nicholas Justin

(56) References cited:
- WO-A-2005/091574
- DIELISSEN J ET AL: "Concepts and Implementation of the Philips Network-on-Chip" INTERNET CITATION, [Online] 13 November 2003 (2003-11-13), XP002330547 Retrieved from the Internet: URL:http://www.homepages.inf.ed.ac/kgoosse n/2003-ipsoc.pdf> [retrieved on 2005-06-06]
- RADULESCU A ET AL: "An efficient on-chip network interface offering guaranteed services, shared-memory abstraction, and flexible network con .guration" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, 16 February 2004 (2004-02-16), pages 1-6, XP010684780 ISBN: 0-7695-2085-5
- MARTIN P: "Design of a Virtual Component Neutral Network-on-Chip Transaction Layer" DESIGN, AUTOMATION AND TEST IN EUROPE, 2005. PROCEEDINGS MUNICH, GERMANY 07-11 MARCH 2005, PISCATAWAY, NJ, USA,IEEE, 7 March 2005 (2005-03-07), pages 336-337, XP010779977 ISBN: 0-7695-2288-2
- BENINI L ET AL: "Xpipes: a network-on-chip architecture for gigascale systems-on-chip" IEEE CIRCUITS AND SYSTEMS MAGAZINE, IEEE SERVICE CENTER, NEW YORK, NY, US, vol. 4, no. 2, 2004, pages 18-31, XP011118475 ISSN: 1531-636X

## Description

### BACKGROUND OF THE INVENTION

The present invention relates to a Network-on-Chip (NoC) system employing the Advanced eXtensible Interface (AXI) protocol. More particularly, the present invention relates to an NoC system employing the AXI protocol and enabling data to be divided into plural packets with the AXI protocol applied to the NoC, thereby supporting diverse AXI protocol functions and enhancing band utilization capability.

Coping with the convergence which gradually integrates computers, communications, and broadcast, demands on conventional Application Specific Integrated Circuits (ASICs) and Application Specific Standard Products (ASSPs) have tended to move to system on chip (SoC) designs. In addition, the light-weight, thin, and high-performance trends of information technology (IT) devices have become a factor accelerating SoC industry growth.

The SoC is a technology-intensive semiconductor technology that implements a complicated system, having several conventional functions, into one chip. Various technologies are under study for SoC implementations and, specifically, a method of connecting several intellectual properties (IPs) embedded in a chip is emerging as an important topic. Here, IP refers intellectual property cores which may be embedded on a chip. These IPs are reusable virtual components which may include both digital and analog circuitry, which perform specific functions (e.g. controllers, digital signal processing, graphics).

A connection method based on a bus is typical of the conventional technology for connecting IPs. However, in a bus structure, if a specific IP uses the bus, the other IPs cannot use the bus. Therefore, accordingly, as the integration density of a chip becomes higher and the amount of information traffic between IPs is abruptly increased, the SoC using a bus structure without extensibility support encounters certain structural limitations.

As an approach for overcoming such structural limitations of the SoC using a bus structure, an NoC technology was newly proposed, which applies general network technologies within a chip to connect the IPs.

Additionally, there is an Advanced Microcontroller Bus Architecture (AMBA) by ARM. AMBA is a standard bus specification for connecting and managing the IPs in a SoC. The bus types of the AMBA include Advanced High-Performance Bus (AHB), Advanced Peripheral Bus (APB), and AXI. Of the above, the AXI is an IP interface protocol, having advanced functions such as a Multiple outstanding address function, a Data interleaving function, and the like.

When information is provided through address lines and data lines of a bus, a multiple outstanding address function is a function for allowing the utilization of idle transmission time occurring between addresses by transmitting the address of each data only once through the address lines at the same time as the data is transmitted. When several masters transmit data to one slave, the data interleaving function allows the data to be interleaved with each other at the slave, thus allowing the more efficient utilization of bandwidth as well as providing an advantage in respect of latency.

When the AXI having such functions is implemented in the NoC as an interface protocol between each IP and a switch of an NoC, the structural limitations occurring at the SoC due to the characteristics of the bus can be overcome, so the speed and reusability upon data transmissions between IPs are expected to be increased.

For this, the paper entitled "An Efficient On-Chip NI Offering Guaranteed Services, Shared-Memory Abstraction, and Flexible Network Configuration", published Jan. 2005 in IEEE Transactions on Computer-Aided Design of Integrated Circuits and System by Philips proposes a Network Interface (NI) and packet formats for an NoC employing the AXI.

However, the paper of Philips only conceptually explains the devices for supporting the AXI, and focuses on the point that the AXI is used for connections between the NoC and the IP. Further, one burst is converted into one packet and then transmitted, so it is impossible to support not only diverse AXI functions such as a Multiple outstanding address function, a data interleaving function, and a data reordering function but also Write strobes (WSTRBs). Furthermore, when one burst is converted into one packet, the bandwidth utilization capability becomes lowered since the larger a burst size is, the longer the waiting time for converting the burst into the packet.

Accordingly, when the AXI is applied to a NoC system, a method is needed that can support all the functions of the AXI itself.

WO 2005/091574 describes a NoC circuit with network interfaces and adaptors between the network interlaces and modules. Further details are provided in Dielissen et al, "Concepts and Implementation of the Philips Network-on-ChiP", Internet citation presently available at www,homepages.inf.ed/kgoosen/003-ipsoc.pdf.

### SUMMARY OF THE INVENTION

According to an aspect of the present intention, there is provided a Network-on-Chip (NoC) system according to claim 1.

The invention thus provides an NoC system employing the AXI protocol and enabling data to be divided into plural packets with the AXI protocol applied to the NoC, thereby supporting diverse AXI protocol functions and enhancing the band utilization capability.

The packet generator may include a handshake checking unit which is configured to decide whether the respective IP and its corresponding NI are in a state of enabling data transmissions; a channel identifying unit which is configured to identify through which channel of a plurality of channels connecting the respective IP and its corresponding NI the data are transmitted; a packet unit which is configured to packetize into at least one packet the data from the respective IP through the channel provided by the channel identifying unit; a de-packet unit which is configured to restore packets provided from the router into original data; and a packet buffer which is configured to store packets from the packet unit and packets from the router.

Upon data transmissions between the respective IP and its corresponding NI, the handshake checking unit may generate a VALID handshake signal and a READY handshake signal which indicate whether the data transmissions of the respective IP and its corresponding NI are available.

Upon the data transmissions from the respective IP to its corresponding NI, the handshake checking unit may change the VALID handshake signal depending on whether the respective IP may transmit data, and changes the READY handshake signal depending on whether the NI corresponding to the respective IP may transmit data.

Upon the data transmissions from the corresponding NI to the respective IP, the handshake checking unit may change the VALID handshake signal depending on whether the respective NI may transmit data and changes the READY handshake signal depending on whether the respective IP may transmit data.

Depending on information contained in the data and the packet, the channel identifying unit may decide through which channel of a Write Address (WA) channel, a Write data (W) channel, a Write Response (B) channel, a Read Address (RA) channel, and a Read Data (R) channel, the data and the packet are transmitted.

According to a channel identified by the channel identifying unit and data provided from the respective IP, the packet unit may generate one of a read request packet transmitted to the AR channel, a write request packet transmitted to the WA channel, a read packet transmitted to the R channel, a write packet transmitted to the W channel, and a write response packet transmitted to the B channel.

The read request packet and the write request packet may include a header containing at least one of a packet type, transmitter's information, data length, data size, data type, information on whether a lock is set, information on whether cache memory is available and security level, and a payload containing a read memory address in the read request packet and a write memory address in the write request packet.

The read packet may include a header containing at least one of a packet type, information on a read target IP, information on whether the read request packet is successfully transmitted and information on whether a burst is a last one, and a payload containing read data.

The write packet may include a header containing at least one of a packet type, information on a write target IP, Write Strobe (WSTRB) information and information on whether a burst is a last one, and a payload containing write data.

The read response packet may include a header containing at least one of a packet type, information on a response IP and information on whether a request has been accepted.

The flit generator may include an address decoder which is configured to convert a network address, which is contained in the packet or flit, into a memory address or vice versa; a flit unit which is configured to convert a packet, which has an address converted by the address decoder, into a flit; a de-flit unit which is configured to convert a flit provided by the router into a packet; and a flit buffer which is configured to store a flit from the flit unit and a flit from the router.

According to another aspect of the invention, a network interface device for use in a network-on-chip system employing an Advanced eXtensible Interface (AXI) protocol according to claim 13 is provided.

### BRIEF DESCRIPTION OF THE DRAWINGS

The above and other aspects of the present invention will be more apparent by describing certain exemplary embodiments of the present invention with reference to the accompanying drawings, in which:
FIG. 1 is a block diagram for showing relations between an NI and a router according to an exemplary embodiment of the present invention;
FIG. 2 is a block diagram for showing the NI of a NoC system employing the AXI protocol according to an exemplary embodiment of the present invention;
FIGS. 3A to 3D are views for showing packet structures transmitted through each channel;
FIG. 3E is a view showing a flit structure;
FIG. 4A is a system configuration view for showing data processing procedures in the NoC system according to an exemplary embodiment of the present invention;
FIG. 4B is a view for showing signals generated in the procedures of FIG. 4A;
FIG. 5A is a system configuration view for showing divisions of a burst in the NoC system according to another exemplary embodiment of the present invention;
FIG. 5B is a signal diagram according to the exemplary embodiment of FIG. 5A;
FIG. 6 is a view for showing signals occurring as the present NoC system divides a burst according to yet another exemplary embodiment of the present invention;
FIG. 7 is a view for showing signals occurring as the present NoC system divides a burst according to still another exemplary embodiment of the present invention; and
FIG. 8 is a system configuration view for showing data processing procedures at an AXI slave upon data transmissions in the NoC system according to an exemplary embodiment of the present invention.

### DETAILED DESCRIPTION OF EXEMPLARY EMBODIMENTS

Hereinafter, the present invention will be described in detail with reference to the accompanying drawings.

In the present disclosure, for convenient explanations, IPs in a chip are divided into a controlling IP and a controlled IP in writing and reading data, and the controlling IP and the controlled IP are referred to as an AXI master and an AXI slave respectively. The AXI master and the AXI slave transmit data through an NoC router, and an NI is installed between the AXI master and the NoC router and between the NoC router and the AXI slave respectively.

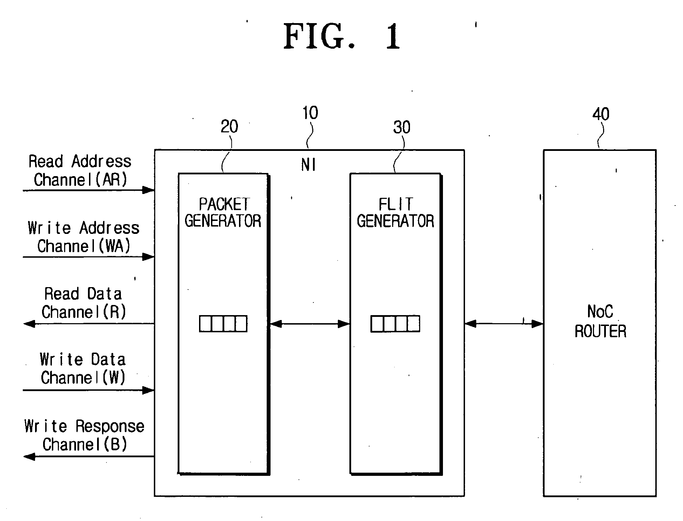

FIG. 1 is a block diagram for showing relations between an NI and a router according an exemplary embodiment to the present invention. As shown in FIG. 1, the NI 10 includes a packet generator 20 and a flit generator 30, and the packet generator 20 exchanges packets with the flit generator 30, and the NI 10 exchanges flits with the NoC router 40.

Meanwhile, the NI 10 and the AXI master and the NI 10 and the AXI slave are connected via five channels respectively, and the channels are a Write Address (WA) channel, a Write Data (W) channel, a Write Response (B) channel, a Read Address (AR) channel, and a Read Data (R) channel.

In order to write data into the AXI slave, the AXI master provides a packet requesting for a data write through the WA channel and, if provided with a packet allowing the data write from the AXI slave through the B channel, the AXI master provides the AXI slave with data through the W channel. On the contrary, when reading data, the AXI master requests the AXI slave for a data read by using the AR channel, and the AXI slave provides the AXI master with data through the R channel.

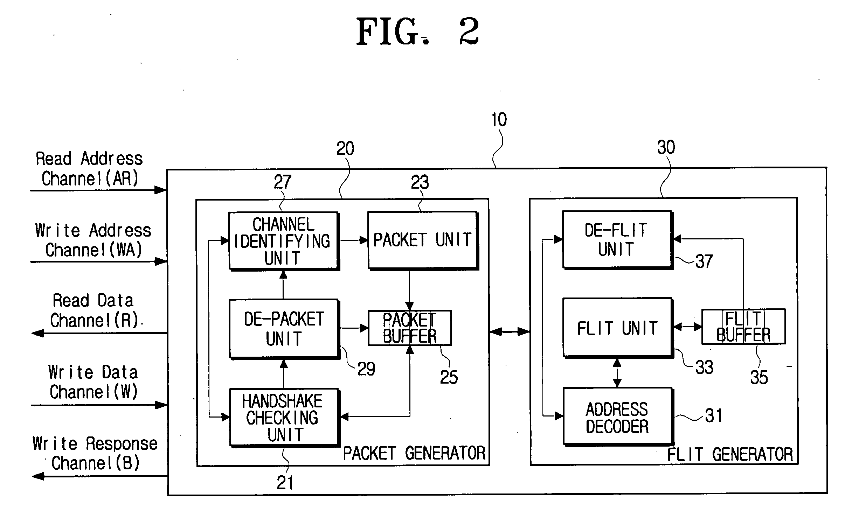

FIG. 2 is a block diagram for showing the NI of a NoC system employing the AXI protocol according to an exemplary embodiment of the invention, the NI being connected to each channel and transmitting packets.

The packet generator 20 of the NI 10 processes the packets transmitted between the AXI master and the NoC router 40 and between the NoC router 40 and the AXI slave, and the flit generator 30 converts the packets of the packet generator 20 into flits, or converts flits into packets. Such an NI 10 is installed at the AXI master and AXI slave sides in the same structure.

The packet generator 20 includes a handshake checking unit 21, a channel identifying unit 27, a packet unit 23, a packet buffer 25, and a de-packet unit 29.

The handshake checking unit 21 generates a VALID handshake signal and a READY handshake signal, and all the above five channels use the same VALID handshake signal and READY handshake signal in order to transmit data and control information. The handshake checking unit 21 checks the capacity of the packet buffer 25 and decides if packets can be stored, and generates the VALID handshake signal and the READY handshake signal.

The handshake checking unit 21, when the AXI master transmits data to the NI 10, changes the VALID handshake signal depending on whether or not the AXI master transmits data, and changes the READY handshake signal depending on a state of the packet buffer 25 of the NI 10. The handshake checking unit 21 outputs the VALID handshake signal of high level if the AXI master transmits data, and outputs the READY handshake signal of high level if the packet buffer 25 of the NI 10 can store data.

Further, the handshake checking unit 21, when the NI 10 transmits data to the AXI master, changes the VALID handshake signal depending on whether or not the NI 10 transmits data, and changes the READY handshake signal if the AXI master can receive data.

Accordingly, only when both the VALID handshake signal and the READY handshake signal become high, data or control information is transmitted.

The channel identifying unit 27 identifies through which channel the data, which are received through the channels that are connected to the NI 10, are inputted, and provides the packet unit 23. That is, the channel identifying unit 27 decides that the data are provided through any of the WA channel, W channel, B channel, AR channel, and R channel according to the information inputted from each channel. For example, if the input data contain information on whether a lock (LOCK) is set (AxLOCK), whether a cache memory can be used (AxCACHE), a security level (AxPROT), and the like, the channel identifying unit 27 decides that the corresponding data are provided through the WA channel or the AR channel. Further, the channel identifying unit 27 decides that the data containing whether a read request packet is successfully transmitted (RRESP) are provided through the R channel, decides that the data containing WSTRB bits are provided through the W channel, and decides that the data containing whether a request is accepted (BRESP) are provided through the B channel.

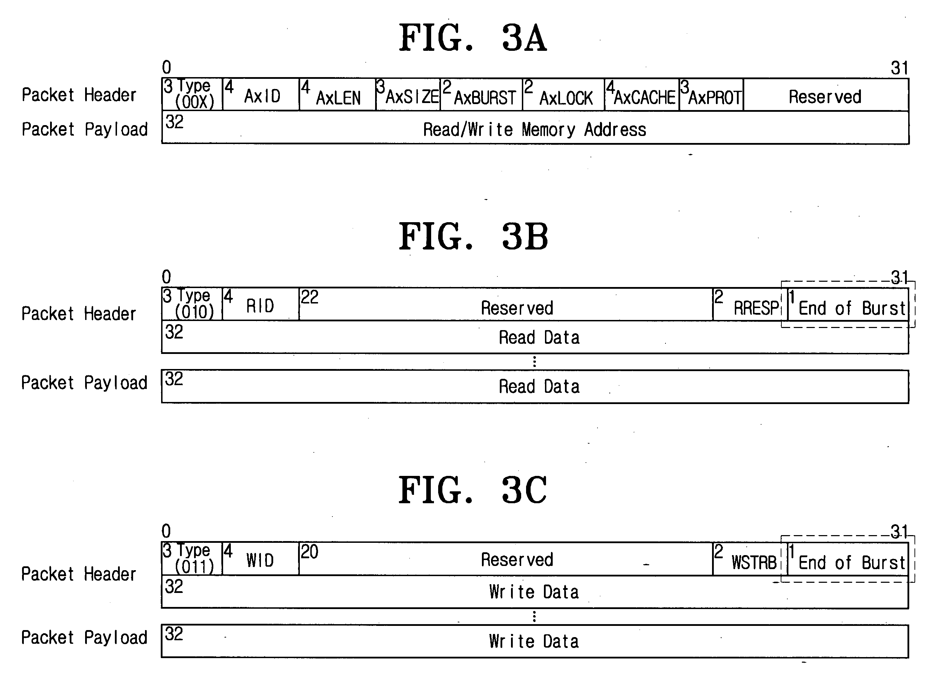

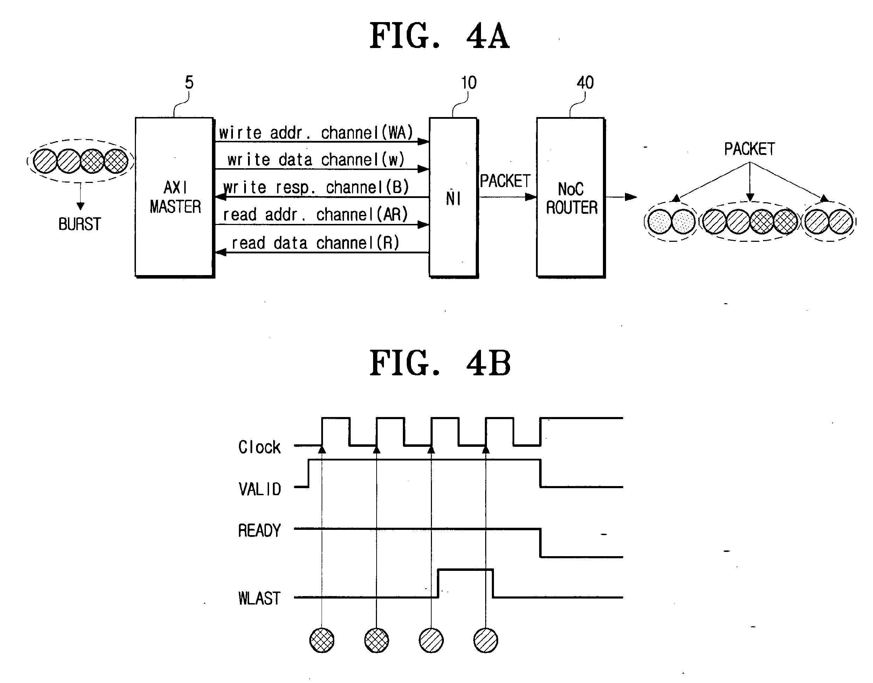

The packet unit 23 generates the packets shown in FIGS. 3A to 3D, using the data inputted through any of the channels and the channel confirmed by the channel identifying unit 27. The packet unit 23 determines a packet type contained in each packet header according to a channel type identified by the channel identifying unit 27, and processes the provided data to generate packets. The packet unit 23 can generate one or more packets from one burst of data depending on the conditions shown in FIGS. 4 to 7 which will be described later.

FIGS. 3A to 3D are views for showing packet structures transmitted through each channel.

FIG. 3A is a view for showing the structures of a read request packet and a write request packet transmitted through the WA channel and the AR channel. The read request packet and write request packet are configured in the same format. The header contains information on the packet type (Type), transmitter's ID (AxID), data length (AxLEN), data size (AxSIZE), data type (AxBURST), whether a lock (LOCK) is set (AxLOCK), whether cache memory can be used (AxCACHE), security level (AxPROT), and a reserved section (Reserved), and the payload contains a read or a write memory address. The packet type indicates any of a read request packet, a write request packet, a read packet, a write packet, and a write response packet, and whether a lock (LOCK) is set (AxLOCK) indicates whether a lock is set so that only a specific AXI master or AXI slave may receive packets. Whether cache memory can be used (AxCACHE) indicates whether cache memory, in addition to memory, can be used, and the security level (AxPROT) indicates whether to protect corresponding packets and the security level for protecting packets.

FIG. 3B is a view for showing the structure of a read packet transmitted through the R channel. The packet header contains a packet type (Type), an ID of an AXI slave (RID) performing a read operation according to a request of the AXI master, a reserved section (Reserved), whether the read request packet is successfully transmitted (RRESP), and information for identifying whether the burst is a last one (End of Burst). The RRESP indicates whether the read request packet is successfully transmitted, whether a slave error has occurred, and whether an address error has occurred. The payload of the read packet contains read data.

FIG. 3C is a view for showing the structure of a write packet transmitted through the W channel. The packet header of the write packet contains a packet type (Type), ID of an AXI slave (WID) being the target of write, a reserved section (Reserved), WSTRB bits (WSTRB), and information for identifying whether the burst is the last one (End of Burst), and the payload contains write data.

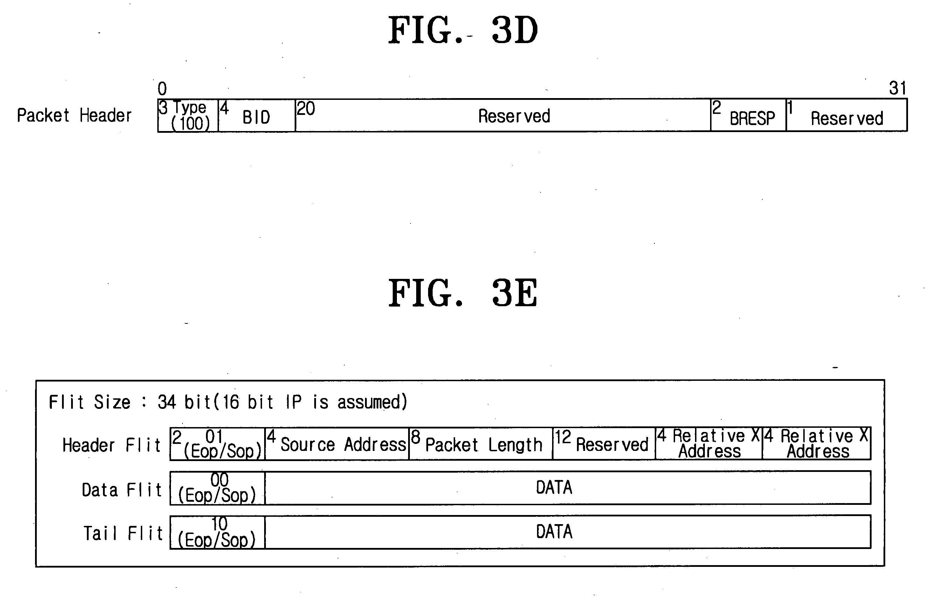

FIG. 3D is a view for showing the structure of a read response packet transmitted through the B channel. The read response packet has only a header, and the header contains information such as packet type (Type), ID of a responding AXI slave (BID), a reserved section (Reserved), whether the request has been accepted (BRESP), and another reserved section (Reserved).

The de-packet unit 29 is provided with packets from the flit generator 30, and processes the provided packets to restore the original data format provided by the AXI master or the AXI slave. The de-packet unit 29 provides the channel identifying unit 27 with the restored data.

The packet buffer 25 stores the packets generated by the packet unit 23 or stores the packets provided by the flit generator 30.

Meanwhile, the flit generator 30 contains an address decoder 31, flit unit 33, de-flit unit 37, and flit buffer 35.

The address decoder 31 converts a memory address into a network address or vice versa. When the packet generator 20 provides the flit generator 30 with packets, the address decoder 31 converts the memory address contained in the packet into a network address, and, when flits are provided from the router 40 to the NI 10, the address decoder 31 converts the network address contained in the flit into a memory address.

The flit unit 33 is provided with a packet having a converted address, and forms a flit shown in FIG. 3E. As shown in FIG. 3E, the flit contains a header flit, a data flit, and a tail flit, and the head of each flit contains two bits indicating the header flit, data flit, and tail flit. Of the above flits, the header flit contains eight-bit address information representing a destination address in XY coordinates, and the data flit and the tail flit carry data.

The de-flit unit 37 restores the flit provided by the NoC router 40 to the format of a packet generated by the packet generator 20, and provides the packet generator 20 with the restored packet.

The flit buffer 35 stores the flit generated by the flit unit 33, or the flit provided by the NoC router 40.

The process of transmitting data by use of the NI 10 configured as above will now be described.

First, if the AXI master transmits write request data, write data, or read request data to the NI 10 through any of the WA channel, W channel, and AR channel, the packet generator 20 and the flit generator 30 of the NI 10 process data, and generate packets and flits.

The handshake checking unit 21 of the packet generator 20 identifies a signal received from the AXI master and a remaining capacity of the packet buffer 25, and decides whether the data can be transmitted. If both the AXI master and the NI can transmit the data as a result of the decision, the handshake checking unit 21 generates the VALID handshake signal and the READY handshake signal of high level, i.e., drives those signals high. Next, the channel identifying unit 27 identifies through which channel of the five channels the data has been provided on, and provides the packet unit 23 with the channel information. The packet unit 23 generates packets with formats shown in FIGS. 3A to 3D according to the channel and the provided data. One or more packets are generated from data of one burst. The generated packets are temporarily stored in the packet buffer 25, and then transferred to the flit generator 30.

The address decoder 31 of the flit generator 30 converts a memory address contained in the packets into a network address, and the flit unit 33 converts the packets into a flit format for convenient transmissions. The address decoder can form only the header flit among the header flit, data flit, and tail flit, or it can form all the flits. The flit buffer 35 stores the generated flits.

The flits stored in the flit buffer 35 are transmitted to the NoC router 40, and the flits arrived at the NoC router 40 are transmitted again to the AXI slave via the NI 10. In the NI 10 on the side of the AXI slave, a process reverse to that of the NI 10 on the side of the AXI master side is performed.

If the flits are entered into the NI 10 on the side of the AXI slave, the flit buffer 35 of the flit generator 30 stores the flits, and the de-flit unit 37 restores the flits in a packet format. Further, the address decoder 31 converts a network address into a memory address, and provides the memory address to the de-packet unit 29. The restored packets are transferred to the packet generator 20, and stored into the packet buffer 25. The de-packet unit 29 of the packet generator 20 converts the packets into the original data, and the channel identifying unit 27 identifies the channel, and provides the de-packet unit 29 with the information. The AXI master is provided with the data restored by the de-packet unit 29 through the identified channel.

In the NoC system provided with the NI 10 employing AXI as above, exemplary embodiments which will be described as below can be implemented when data are transmitted according to the implementation of the NI 10 having a structure described above.

FIG. 4A is a system configuration view for showing data processing procedures in the NoC system according to a first exemplary embodiment of the present invention.

As shown in FIG. 4A, when the AXI master 5 transmits one burst of data, the data is provided to the NI 10 through the channel corresponding to the type of the data. The NI 10 converts the data into packets through the process described above, and thus, one burst of data is converted into one packet. If the packets so generated are provided to the NoC router 40, the NoC router 40 sequentially transmits the packets received from several AXI masters 5 to the NI 10 on the side of the AXI slave.

The individual signals in such a transmission process will now be described. As shown in FIG. 4B, both the VALID handshake signal and the READY handshake signal are outputted in a high level all the time while one burst is transmitted, so one burst can be converted into one packet. When a packet is completely transmitted, the WLAST signal is outputted in the high level.

The exemplary embodiment of FIG. 4 shows the conversions of one burst into one packet. As in the Phillips's paper, the NoC system of the present invention can convert one burst of data into one packet for transmission if both the VALID handshake signal and the READY handshake signal are in the high level all the time while one burst of data is transmitted.

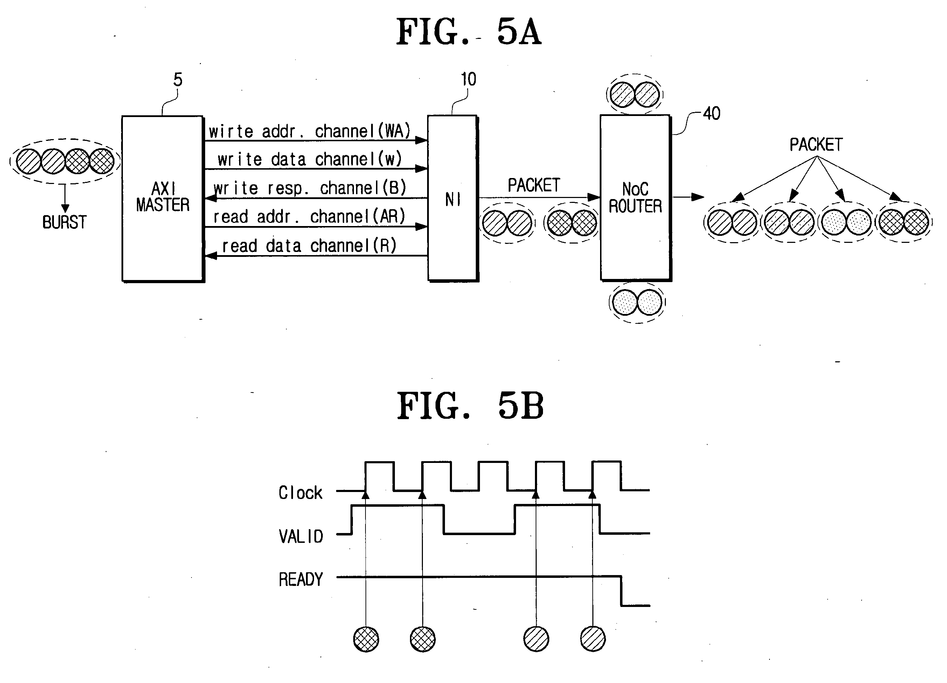

FIG. 5A is a system configuration view for showing divisions of a burst in the NoC system according to a second exemplary embodiment of the present invention.

When the AXI master 5 transmits data, the handshake checking unit 21 of the NI 10 checks the remaining capacity of the packet buffer 25, and checks if the AXI master 5 can transmit data. As a result of the check, if both the AXI master 5 and the NI 10 can transmit data, the handshake checking unit 21 generates the VALID handshake signal and the READY handshake signal in the high level, i.e., they are driven high, to transmit data. If the AXI master 5 is interrupted with certain occasions during transmitting data as above, the handshake checking unit 21 generates a low-level VALID handshake signal. Then, if the VALID handshake signal becomes low, the packet unit 23 converts the data received before the interruption into packets. When the VALID handshake signal becomes high, the packet unit 23 receives data and then generates packets again.

Accordingly, as shown in FIG. 5B, when the VALID handshake signal changes from high to low and then to high again, one burst of data is converted into two packets as shown in FIG. 5A. If the VALID handshake signal more frequently changes, the number of packets is increased.

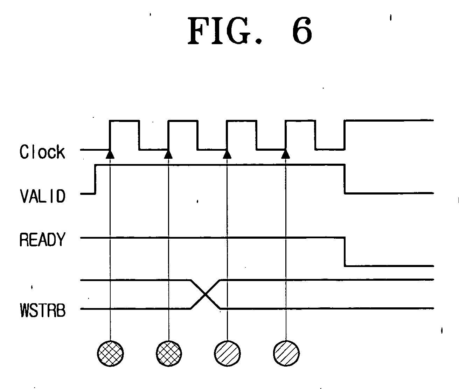

FIG. 6 is a view for showing signals occurring as the present NoC system divides a burst according to a third exemplary embodiment of the present invention.

If data transmitted by the AXI master 5 is SPARSE data, a WSTRBE function is performed according to communication regulations, and a portion in which the WSTRBE signal is inverted indicates that an arbitrary WRITE STROBES is changed to another WRITE STROBES. When the WRITE STROBES is changed in this manner, data can be divided for generation of separate packets.

Accordingly, as shown in FIG. 5A, one burst of data is divided into plural packets in the NI 10, and transferred to the NoC router 40.

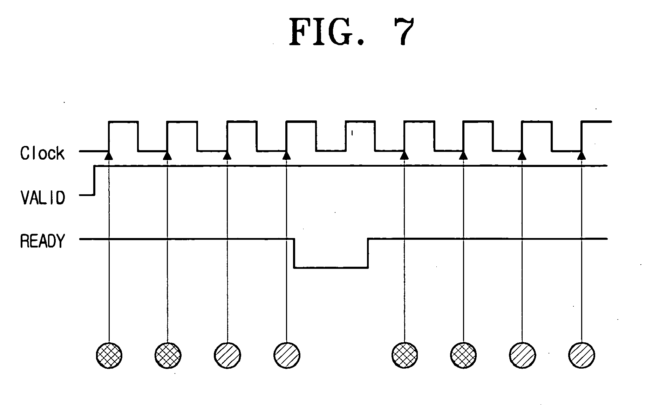

FIG. 7 is a view for showing signals occurring as the present NoC system divides a burst according to a fourth exemplary embodiment of the present invention.

As shown in FIG. 7, if the READY handshake signal is changed from high to low while the VALID handshake signal maintains high, i.e., the packet buffer 25 of the NI 10 has no remaining capacity while the AXI master 5 is transmitting data, the packet unit 23 generates packets from the data transmitted until then. Next, if the READY handshake signal is changed to high again, the packet unit 23 receives data and generates other packets.

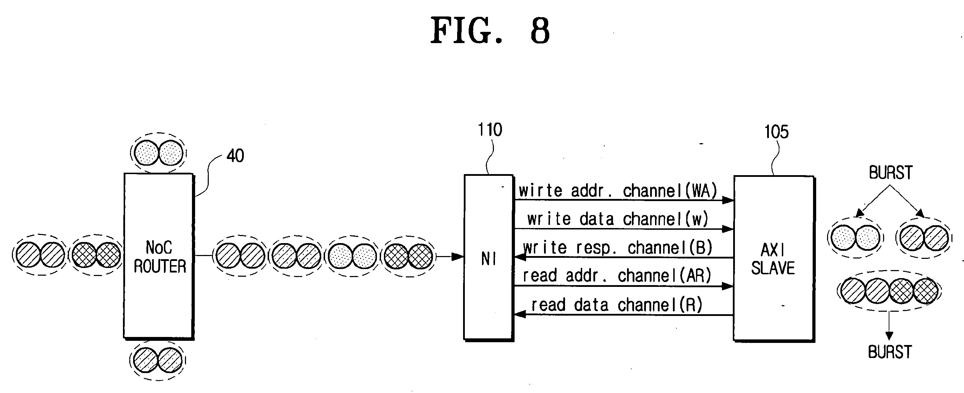

FIG. 8 is a system configuration view for showing data processing procedures at the AXI slave upon data transmissions in the NoC system according to an exemplary embodiment of the present invention.

If one burst of data is divided into plural packets and transmitted according to one of the exemplary embodiments of FIGS. 5 to 7, as shown in FIG. 8, the NoC router 40 transmits packets to the NI 110 on the side of the AXI slave 105. The NI 110 on the side of the AXI slave 105 converts the packets into data, creates one burst from the data divided into the plural packets, and transfers the burst to the AXI slave 105.

As above, the NoC system employing the AXI protocol can divide one burst of data into plural packets and transmit the packets according to the changes of transmission environments as shown in FIGS. 4 to 7. Accordingly, unlike the Phillips' paper in which one burst of data is conventionally converted into one packet and transmitted, the NoC system according to exemplary embodiments of the present invention can support not only the Multiple outstanding address function, data interleaving function, and data reordering function, but also WSTRB (Write strobe). In addition, the NoC system divides one burst into plural packets, thereby shortening the waiting time for transmissions, and enhancing the band utilization capability.

As aforementioned, the NoC system of the present invention can support not only the Multiple outstanding address function, data interleaving function, and data reordering function, but also WSTRB (Write strobe), and shorten the waiting time for transmission and enhance the band utilization capability.

Further, the foregoing embodiments and advantages are merely exemplary and are not to be construed as limiting the present invention. The present teaching can be readily applied to other types of apparatuses. Also, the description of exemplary embodiments of the present invention is intended to be illustrative, and not to limit the scope of the claims, and many alternatives, modifications, and variations will be apparent to those skilled in the art.

## Claims

1. A Network-on-chip system employing an Advanced extensible Interface protocol, the system comprising:
a plurality of intellectual properties which are installed in a chip and read and write data;
a router (40) which is connected to the plurality of intellectual properties and transmits data; and
a plurality of network interfaces (10), each network interface corresponding to a respective intellectual property of the plurality of intellectual properties and installed between the respective intellectual property and the router, wherein each network interface is configured to process data transmitted between the respective intellectual property and the router and divide data provided from the respective intellectual property into at least one packet.
Wherein the network interface comprises:
a packet generator (20) which is configured to packetize data provided from the respective intellectual property, or to convert packets into data, the packet generator being capable of generating both one packet or more than one packet from one burst of data; and
a flit generator (30) which is configured to convert packets generated from the packet generator into flits in a format for transmission, or to convert the flits into packets.

2. The Network-on-chip system according to claim 1 wherein the packet generator (20) comprises:
a handshake checking unit (21) which is configured to decide whether the respective intellectual property and its corresponding network interface are in a state of enabling data transmissions;
a channel identifying unit (27) which is configured to identify through which channel of a plurality of channels connecting the respective intellectual property and its corresponding network interface the data are transmitted;
a packet unit (23) which is configured to packetize into at least one packet the data from the respective intellectual property through the channel provided by the channel identifying unit;
a de-packet unit (29) which is configured to restore packets provided from the router into original data; and
a packet buffer (25) which is configured to store packets from the packet unit and packets from the router.

3. The Network-on-chip system as claimed in claim 2, wherein, upon data transmissions between the respective intellectual property and its corresponding network interface, the handshake checking unit (21) generates a VALID handshake signal and a READY handshake signal which indicate whether the data transmissions of the respective intellectual property and its corresponding network interface are available.

4. The Network-on-chip system as claimed in claim 2 or 3, wherein, upon the data transmissions from the respective intellectual property to its corresponding network interface, the handshake checking unit (21) changes a VALID handshake signal depending on whether the respective intellectual property can transmit data, and changes a READY handshake signal depending on whether the network interface corresponding to the respective intellectual property can transmit data.

5. The Network-on-chip system as claimed in claim 2, 3 or 4, wherein, upon the data transmissions from the corresponding network interface to the respective intellectual property, the handshake checking unit (21) changes a VALID handshake signal depending on whether the respective network interface can transmit data and changes a READY handshake signal depending on whether the respective intellectual property can transmit data.

6. The Network-on-chip system as claimed in any one of claims 2 to 5, wherein, depending on information contained in the data and the packet, the channel identifying unit (27) decides through which channel of a Write Address channel, a Write data channel, a Write Response channel, a Read Address channel, and a Read Data channel, the data and the packet are transmitted.

7. The Network-on-chip system as claimed in any one of claims 2 to 6, wherein, according to a channel identified by the channel identifying unit (27) and data provided from the respective intellectual property, the packet unit (23) generates one of a read request packet transmitted to a read address channel, a write request packet transmitted to a write address channel, a read packet transmitted to a read channel, a write packet transmitted to a write channel, and a write response packet transmitted to a write response channel.

8. The Network-on-chip system as claimed in claim 7, wherein the read request packet and the write request packet comprise:
a header containing at least one of a packet type, transmitter's information, data length, data size, data type, information on whether a lock is set, information on whether cache memory is available and security level; and
a payload containing a read memory address in the read request packet and a write memory address in the write request packet.

9. The Network-on-chip system as claimed in claim 7, wherein the read packet comprises:
a header containing at least one of a packet type, information on a read target intellectual property, information on whether the read request packet is successfully transmitted and information on whether a burst is a last one; and
a payload containing read data.

10. The Network-on-chip system as claimed in claim 7, 8 or 9, wherein the write packet comprises:
a header containing at least one of a packet type, information on a write target intellectual property, Write Strobe information, and information on whether a burst is a last one; and
a payload containing write data.

11. The Network-on-chip system as claimed in any one of claims 7 to 10, wherein the read response packet includes a header containing at least one of a packet type, information on a response intellectual property and information on whether a request has been accepted.

12. The Network-on-chip system as claimed in any preceding claim, wherein the flit generator (30) comprises:
an address decoder (31) which is configured to convert a network address, which is contained in the packet or flit, into a memory address or vice versa;
a flit unit (33) which is configured to convert a packet, which has an address converted by the address decoder, into a flit;
a de-flit unit (37) which is configured to convert a flit provided by the router into a packet; and
a flit buffer (35) which is configured to store a flit from the flit unit and a flit from the router.

13. A network interface device for use in a network-on-chip system employing an Advanced extensible Interface protocol, the device comprising:
a packet generator (20) which is configured to packetize data provided from an intellectual property, or to convert packets into data, the packet generator being capable of generating both one packet or more than one packet from one burst of data; and
a flit generator (30) which is configured to convert packets generated from the packet generator into flits in a format for transmission, or to convert the flits into packets.

14. The network interface device as claimed in claim 13, wherein the packet generator (20) comprises:
a handshake checking unit (21) which is configured to decide whether the intellectual property and the network interface device are in a state of enabling data transmissions;
a channel identifying unit (27) which is configured to identify through which channel of a plurality of channels connecting the intellectual property and the network interface device the data are transmitted;
a packet unit (23) which is configured to packetize into at least one packet the data from the intellectual property through the channel provided by the channel identifying unit;
a de-packet unit (29) which is configured to restore packets provided from a router into original data; and
a packet buffer (25) which is configured to store packets from the packet unit and packets from the router.

15. The network interface device as claimed in claim 14, wherein, according to a channel identified by the channel identifying unit and data provided from the intellectual property, the packet unit (23) generates one of a read request packet transmitted to an read address channel, a write request packet transmitted to a write address channel, a read packet transmitted to a read channel, a write packet transmitted to a write channel, and a rite response packet transmitted to a write response channel.

16. The network interface device as claimed in claim 13, 14 or 15, wherein the flit generator (30) comprises:
an address decoder (31) which is configured to convert a network address, which is contained in the packet or flit, into a memory address or vice versa;
a flit unit (33) which is configured to convert a packet, which has an address converted by the address decoder, into a flit;
a de-flit unit (37) which is configured to convert a flit provided by a router into a packet; and
a flit buffer (35) which is configured to store a flit from the flit unit and a flit from the router.

## Patentansprüche

1. Netzwerk-on-Chip-System, das ein Advanced eXtensible Interface Protokoll verwendet, wobei das System Folgendes umfasst:
mehrere geistige Eigentümer (IPs), die in einem Chip installiert sind und Daten lesen und schreiben;
einen Router (40), der mit den mehreren IPs verbunden ist und Daten sendet; und
mehrere Netzwerkschnittstellen (10), wobei jede Netzwerkschnittstelle einem jeweiligen IP der mehreren IPs entspricht und zwischen dem jeweiligen IP und dem Router installiert ist, wobei jede Netzwerkschnittstelle so konfiguriert ist, dass sie zwischen dem jeweiligen IP und dem Router übertragene Daten verarbeitet und vom jeweiligen IP bereitgestellte Daten in wenigstens ein Paket unterteilt;
wobei die Netzwerkschnittstelle Folgendes umfasst:
einen Paketgenerator (20), der so konfiguriert ist, dass er vom jeweiligen IP bereitgestellte Daten paketiert oder Pakete in Daten konvertiertt, wobei der Paketgenerator sowohl ein Paket oder mehr als ein Paket von einem Datenbündel erzeugen kann; und
einen Flit-Generator (30), der so konfiguriert ist, dass er vom Paketgenerator erzeugte Pakete in Flits in einem Format zur Übertragung konvertieren oder die Flits zu Paketen konvertieren kann.

2. Netzwerk-on-Chip-System nach Anspruch 1, wobei der Paketgenerator (20) Folgendes umfasst:
eine Handshake-Prüfeinheit (21), die so konfiguriert ist, dass sie entscheidet, ob das jeweilige IP und seine entsprechende Netzschnittstelle in einem Zustand sind, in dem Datenübertragungen möglich sind;
eine Kanalidentifiziereinheit (27), die so konfiguriert ist, dass sie identifiziert, durch welchen von mehreren Kanälen, die das jeweilige IP und seine entsprechende Netzwerkschnittstelle verbinden, die Daten übertragen werden;
eine Paketiereinheit (23), die so konfiguriert ist, dass sie die Daten von dem jeweiligen IP durch den von der Kanalidentifiziereinheit bereitgestellten Kanal zu wenigstens einem Paket paketiert;
eine Entpaketiereinheit (29), die so konfiguriert ist, dass sie vom Router bereitgestellte Pakete in Ursprungsdaten zurückversetzt; und
einen Paketpuffer (25), der so konfiguriert ist, dass er Pakete von der Paketiereinheit und Pakete vom Router speichert.

3. Netzwerk-on-Chip-System nach Anspruch 2, wobei die Handshake-Prüfeinheit (21) nach Datenübertragungen zwischen dem jeweiligen IP und seiner entsprechenden Netzwerkschnittstelle ein VALID-Haridshake-Signal und ein READY-Handshake-Signal erzeugt, die anzeigen, ob die Datenübertragungen des jeweiligen IP und seiner entsprechenden Netzwerkschnittstelle verfügbar sind.

4. Netzwerk-on-Chip-System nach Anspruch 2 oder 3, wobei die Handshake-Prüfeinheit (21) nach den Datenübertragungen vom jeweiligen IP zu seiner entsprechenden Netzwerkschnittstelle ein VALID-Handshake-Signal je nachdem ändert, ob das jeweilige IP Daten übertragen kann, und ein READY-Handshake-Signal je nachdem ändert, ob die dem jeweiligen IP entsprechende Netzwerkschnittstelle Daten übertragen kann.

5. Netzwerk-on-Chip-System nach Anspruch 2, 3 oder 4, wobei die Handshake-Prüfeinheit (21) nach den Datenübertragungen von der entsprechenden Netzwerkschnittstelle zum jeweiligen IP ein VALID-Handshake-Signal je nachdem ändert, ob die jeweilige Netzschnittstelle Daten übertragen kann, und ein READY-Handshake-Signal je nachdem ändert, ob das jeweilige IP Daten übertragen kann.

6. Netzwerk-on-Chip-System nach einem der Ansprüche 2 bis 5, wobei die Kanalidentifiziereinheit (27) je nach in den Daten und dem Paket enthaltenen Informationen entscheidet, über welchen Kanal von Write Adress Kanal, write Data Kanal, Write Response Kanal, Read Address Kanal und Read Data Kanal die Daten und das Paket übertragen werden.

7. Netzwerk-on-Chip-System nach einem der Ansprüche 2 bis 6, wobei die Paketiereinheit (23) je nach einem von der Kanalidentifiziereinheit (27) identifizierten Kanal und vom jeweiligen IP bereitgestellten Daten ein zu einem Read Adress Kanal gesendetes Leseanforderungspaket, ein zu einem Write Address Kanal gesendetes Schreibanforderungspaket, ein zu einem Lesekanal gesendetes Lesepaket, ein zu einem Schreibkanal gesendetes Schreibpaket oder ein zu einem Write Response Kanal gesendetes Write Response Paket erzeugt.

8. Netzwerk-on-Chip-System nach Anspruch 7, wobei das Leseanforderungspaket und das Schreibanforderungspaket Folgendes umfassen:
einen Header, der einen Pakettyp, Senderinformationen, Datenlänge, Datengröße, Datentyp, Informationen darüber, ob eine Sperre gesetzt ist, Informationen darüber, ob Cache-Speicher verfügbar ist, und/oder eine Sicherheitsstufe enthält; und
eine Nutzlast, die eine Speicher-Lesen-Adresse im Leseanforderungspaket und eine Speicher-Schreiben-Adresse im Schreibanforderungspaket enthält.

9. Netzwerk-on-Chip-System nach Anspruch 7, wobei das Lesepaket Folgendes umfasst:
einen Header, der einen Pakettyp, Informationen über ein Read-Target-IP, Informationen darüber, ob das Leseanforderungspaket erfolgreich übertragen wird und/oder Informationen darüber enthält, ob ein Bündel ein letztes ist; und
Lesedaten enthaltende Nutzlast.

10. Netzwerk-on-Chip-System nach Anspruch 7, 8 oder 9, wobei das Schreibpaket Folgendes umfasst:
einen Header, der einen Pakettyp, Informationen über ein Write-Target-IP, Write Strobe Informationen und/oder Informationen darüber enthält, ob ein Bündel ein letztes ist; und
Schreibdaten enthaltende Nutzlast.

11. Netzwerk-on-Chip-System nach einem der Ansprüche 7 bis 10, wobei das Read Response Paket einen Header enthält, der einen Pakettyp, Informationen über ein Response-IP und/oder Informationen darüber enthält, ob eine Anforderung akzeptiert wurde.

12. Netzwerk-on-Chip-System nach einem der vorherigen Ansprüche, wobei der Flit-Generator (30) Folgendes umfasst:
einen Adress-Decoder (31), der so konfiguriert ist, dass er eine Netzwerkadresse, die in dem Paket oder Flit enthalten ist, in eine Speicheradresse konvertiert oder umgekehrt;
eine Flit-Einheit (33), die so konfiguriert ist, dass sie ein Paket, das eine vom Adreas-Decoder umgewandelte Adresse hat, in einen Flit konvertiert;
eine De-Flit-Einheit (37), die so konfiguriert ist, dass sie einen vom Router bereitgestellten Flit in ein Paket konvertiert; und
einen Flit-Puffer (35), der so konfiguriert ist, dass er einen Flit von der Flit-Einheit und einen Flit vom Router speichert.

13. Netzwerkschnittstellengerät für die Verwendung in einem Netzwerk-on-Chip-System, das ein Advanced eXtensible Interface Protokoll beinhaltet, wobei das Gerät Folgendes umfasst:
einen Paketgenerator (20), der zum Paketieren von von einem IP bereitgestellten Daten oder zum Konvertieren von Paketen in Daten konfiguriert ist, wobei der Paketgenerator sowohl ein Paket als auch mehr als ein Paket von einem Datenbündel erzeugen kann; und
einen Flit-Generator (30), der so konfiguriert ist, dass er vom Paketgenerator erzeugte Pakete in Flits in einem Format zur Übertragung oder die Flits in Pakete konvertieren kann.

14. Netzwerkschnittstellengerät nach Anspruch 13, wobei der Paketgenerator (20) Folgendes umfasst:
eine Handshake-Prüfeinheit (21), die so konfiguriert ist, dass sie entscheidet, ob das IP oder das Netzwerkschnittstellengerät in einem Zustand sind, in dem Datenübertragungen möglich sind;
eine Kanalidentifiziereinheit (27), die so konfiguriert ist, dass sie identifiziert, über welchen von mehreren das IP und das Netzwerkschnittstellengerät verbindenden Kanälen die Daten übertragen werden;
eine Paketiereinheit (23), die so konfiguriert ist, dass sie die Daten von IP durch den von der Kanalidentifiziereinheit bereitgestellten Kanal in wenigstens ein Paket paketiert;
eine Entpaketiereinheit (29), die so konfiguriert ist, dass sie von einem Router bereitgestellte Pakete in Ursprungsdaten zurückversetzt; und
einen Paketpuffer (25), der so konfiguriert ist, dass er Pakete von der Paketiereinheit und Pakete vom Router speichert.

15. Netzwerkschnittstellengerät nach Anspruch 14, wobei die Paketiereinheit (23) je nach einem von der Kanalidentifiziereinheit identifizierten Kanal und vom IP bereitgestellten Daten ein zu einem Read Adress Kanal gesendetes Leseanforderungspaket, ein zu einem Write Address Kanal gesendetes Schreibanforderungspaket, ein zu einem Lesekanal gesendetes Lesepaket, ein zu einem Schreibkanal gesendetes Schreibpaket oder ein zu einem Write Response Kanal gesendetes Write Response Paket erzeugt.

16. Netzwerkschnittstellengerät nach Anspruch 13, 14 oder 15, wobei der Flit-Generator (30) Folgendes umfasst:
einen Adress-Decoder (31), der so konfiguriert ist, dass er eine in dem Paket oder Flit enthaltene Netzwerkadresse in eine Speicheradresse umwandelt oder umgekehrt;
eine Flit-Einheit (33), die so konfiguriert ist, dass sie ein Paket, das eine vom Adress-Decoder umgewandelte Adresse hat, in einen Flit umwandelt;
eine De-Flit-Einheit (37), die so konfiguriert ist, dass sie einen von einem Router bereitgestellten Flit in ein Paket umwandelt; und
einen Flit-Puffer (35), der so konfiguriert ist, dass er einen Flit von der Flit-Einheit und einen Flit vom Router speichert.

## Revendications

1. Système de réseau sur puce employant un protocole d'interface extensible avancé, le système comprenant :
une pluralité de propriétés intellectuelles qui sont installées dans une puce et des données de lecture et d'écriture ;
un routeur (40) qui est connecté à la pluralité de propriétés intellectuelles et transmet des données ; et
une pluralité d'interfaces de réseau (10), chaque interface de réseau correspondant à une propriété intellectuelle respective de la pluralité de propriétés intellectuelles et étant installée entre la propriété intellectuelle respective et le routeur, chaque interface de réseau étant configurée pour traiter les données transmises entre la propriété intellectuelle respective et le routeur et diviser les données fournies à partir de la propriété intellectuelle respective en au moins un paquet,
dans lequel l'interface de réseau comprend :
un générateur de paquets (20) qui est configuré pour paquétiser les données fournies à partir de la propriété intellectuelle respective, ou pour convertir les paquets en données, le générateur de paquets étant capable de générer à la fois un paquet ou plus d'un paquet à partir d'une rafale de données ; et
un générateur de flits (unités de contrôle de flux) (30) qui est configuré pour convertir en flits les paquets générés par le générateur de paquets sous un format, prévu pour la transmission, ou pour convertir les flits en paquets.

2. Système de réseau sur puce selon la revendication 1, dans lequel le générateur de paquets (20) comprend :
une unité de contrôle de protocole de transfert (21) qui est configurée pour décider si la propriété intellectuelle respective et son interface de réseau correspondante sont dans un état de validation des transmissions de données ;
une unité d'identification de canal (27) qui est configurée pour identifier par quel canal d'une pluralité de canaux connectant la propriété intellectuelle respective et son interface de réseau correspondante sont transmises les données ;
une unité de paquétisation (23) qui est configurée pour paquétiser en au moins un paquet les données provenant de la propriété intellectuelle respective par l'intermédiaire du canal fourni par l'unité d'identification de paquet ;
une unité de dépaquétisation (29) qui est configurée pour restaurer en données d'origine les paquets fournis par le routeur ; et
un tampon de paquets (25) qui est configuré pour stocker les paquets provenant de l'unité de paquétisation et les paquets provenant du routeur.

3. Système de réseau sur puce selon la revendication 2, dans lequel, lors des transmissions de données entre la propriété intellectuelle respective et son interface de réseau correspondante, l'unité de contrôle de protocole de transfert (21) génère un signal de protocole de transfert VALIDE et un signal de protocole de transfert PRET qui indique si les transmissions de données de la propriété intellectuelle respective et son interface de réseau correspondante sont disponibles.

4. Système de réseau sur puce selon la revendication 2 ou 3, dans lequel, lors des transmissions des données de la propriété intellectuelle respective à son interface de réseau correspondante, l'unité de contrôle de protocole de transfert (21) change un signal de protocole de transfert VALIDE selon que la propriété intellectuelle respective peut transmettre les données, et change un signal de protocole de transfert PRET selon que l'interface de réseau correspondant à la propriété intellectuelle respective peut transmettre les données.

5. Système de réseau sur puce selon la revendication 2, 3 ou 4, dans lequel, lors des transmissions de données de l'interface de réseau correspondante à la propriété intellectuelle respective, l'unité de contrôle de protocole de transfert (21) change un signal de protocole de transfert VALIDE selon que l'interface de réseau respective peut transmettre les données et change un signal de protocole de transfert PRET selon que la propriété intellectuelle respective peut transmettre les données.

6. Système de réseau sur puce selon l'une quelconque des revendications 2 à 5, dans lequel, selon les informations contenues dans les données et le paquet, l'unité d'identification de canal (27) décide par lequel d'un canal d'adresse d'écriture, d'un canal de données d'écriture, d'un canal de réponse d'écriture, d'un canal d'adresse de lecture, et d'un canal de données de lecture, les données et le paquet sont transmis.

7. Système de réseau sur puce selon l'une quelconque des revendications 2 à 6, dans lequel, selon un canal identifié par l'unité d'identification de canal (27) et les données fournies par la propriété intellectuelle respective, l'unité de paquétisation (23) génère l'un des paquets suivants : un paquet de demande de lecture transmis à un canal d'adresse de lecture, un paquet de demande d'écriture transmis à un canal d'adresse d'écriture, un paquet de lecture transmis à un canal de lecture, un paquet d'écriture transmis à un canal d'écriture, et un paquet de réponse d'écriture transmis à un canal de réponse d'écriture.

8. Système de réseau sur puce selon la revendication 7, dans lequel le paquet de demande de lecture et le paquet de demande d'écriture comprennent :
un en-tête contenant au moins l'une des informations suivantes : type de paquet, informations sur l'émetteur, longueur de données, taille de données, type de données, information indiquant si un verrou est appliqué, information indiquant si une mémoire cache est disponible et le niveau de sécurité ; et
une charge utile contenant une adresse de mémoire de lecture dans le paquet de demande de lecture et une adresse de mémoire d'écriture dans le paquet de demande d'écriture.

9. Système de réseau sur puce selon la revendication 7, dans lequel le paquet de lecture comprend :
un en-tête contenant au moins l'une des informations suivantes : information sur une propriété intellectuelle cible de lecture, information indiquant si le paquet de demande de lecture est transmis avec succès et information indiquant si une rafale est la dernière ; et
une charge utile contenant des données de lecture.

10. Système de réseau sur puce selon la revendication 7, 8 ou 9, dans lequel le paquet d'écriture comprend :
un en-tête contenant au moins l'une des informations suivantes : type de paquet, information sur une propriété intellectuelle cible d'écriture, information Write Strobe, et information indiquant si une rafale est la dernière ; et
une charge utile contenant des données d'écriture.

11. Système de réseau sur puce selon l'une quelconque des revendications 7 à 10, dans lequel le paquet de réponse de lecture comprend un en-tête contenant au moins l'une des informations suivantes : type de paquet, information sur une propriété intellectuelle de réponse et information indiquant si une demande a été acceptée.

12. Système de réseau sur puce selon l'une quelconque des revendications précédentes, dans lequel le générateur de flits (30) comprend :
un décodeur d'adresse (31) qui est configuré pour convertir une adresse de réseau, qui est contenue dans le paquet ou le flit, en une adresse de mémoire ou vice versa ;
une unité de flit (33), qui est configurée pour convertir en un flit un paquet qui a une adresse convertie par le décodeur d'adresse ;
une unité de déflit (37) qui est configurée pour convertir un flit fourni par le routeur en un paquet ; et
un tampon de flits (35) qui est configuré pour stocker un flit provenant de l'unité de flit et un flit provenant du routeur.

13. Dispositif d'interface de réseau devant être utilisé dans un système de réseau sur puce employant un protocole d'interface extensible avancé, le dispositif comprenant :
un générateur de paquets (20) qui est configuré pour paquétiser les données fournies par une propriété intellectuelle, ou pour convertir les paquets en données, le générateur de paquets étant capable de générer à la fois un paquet ou plus d'un paquet à partir d'une rafale de données ; et
un générateur de flits (30) qui est configuré pour convertir les paquets générés par le générateur de paquets en un format prévu pour la transmission, ou pour convertir les flits en paquets.

14. Dispositif d'interface de réseau selon la revendication 13, dans lequel le générateur de paquets (20) comprend :
une unité de contrôle de protocole de transfert (21) qui est configurée pour décider si la propriété intellectuelle et le dispositif d'interface de réseau sont dans un état de validation des transmissions de données ;
une unité d'identification de canal (27) qui est configurée pour identifier par quel canal d'une pluralité de canaux connectant la propriété intellectuelle et le dispositif d'interface de réseau sont transmises les données ;
une unité de paquétisation (23) qui est configurée pour paquétiser en au moins un paquet les données provenant de la propriété intellectuelle par l'intermédiaire du canal fourni par l'unité d'identification de canal ;
une unité de dépaquétisation (29) qui est configurée pour restaurer les paquets fournis par un routeur en données d'origine ; et
un tampon de paquets (25) qui est configuré pour stocker les paquets provenant de l'unité de paquétisation et les paquets provenant du routeur.

15. Dispositif d'interface de réseau selon la revendication 14, dans lequel, selon un canal identifié par l'unité d'identification de canal et les données fournies par la propriété intellectuelle, l'unité de paquétisation (23) génère l'un des paquets suivants : un paquet de demande de lecture transmis à un canal d'adresse de lecture, un paquet de demande d'écriture transmis à un canal d'adresse d'écriture, un paquet de lecture transmis à un canal de lecture, un paquet d'écriture transmis à un canal d'écriture, et un paquet de réponse d'écriture transmis à un canal de réponse d'écriture.

16. Dispositif d'interface de réseau selon la revendication 13, 14 ou 15, dans lequel le générateur de flits (30) comprend :
un décodeur d'adresse (31) qui est configuré pour convertir une adresse de réseau, qui est contenue dans le paquet ou le flit, en une adresse de mémoire ou vice versa ;
une unité de flit (33) qui est configurée pour convertir en un flit un paquet, qui a une adresse convertie par le décodeur d'adresse ;
une unité de déflit (37) qui est configurée pour convertir en un paquet un flit fourni par un routeur ; et
un tampon de flits (35) qui est configuré pour stocker un flit provenant de l'unité de flit et un flit provenant du routeur.
